# EUROPÄISCHE PATENTSCHRIFT

(11) **EP 2 848 366 B1**
(45) Veröffentlichungstag und Bekanntmachung des Hinweises auf die Patenterteilung: **09.11.2016**
(21) Anmeldenummer: 14184576.8
(22) Anmeldetag: 12.09.2014
(51) Int. Cl.: B23Q 39/02, B23B 3/30, B23Q 7/04

(54) **Drehmaschine und Verfahren**
Lathe and method
Tour et procédé

(30) Priorität: 13.09.2013 EP 13184325
(43) Veröffentlichungstag der Anmeldung: 18.03.2015
(73) Patentinhaber: WZT Wendland-Zerspanungs-Technik GmbH, 29456 Hitzacker (DE)
(72) Erfinder: Prahler, Ralf, 29481 Karwitz (DE)
(74) Vertreter: Raffay & Fleck

(56) Entgegenhaltungen:
- DE-A1-102012 004 709
- DE-B3-102011 119 787

## Beschreibung

Die Erfindung betrifft eine Drehmaschine mit hauptzeitparalleler Be- und Entladung sowie ein Verfahren zur spanenden Bearbeitung.
Es ist aus der DE 10 2009 052 984 A1 bekannt derartige Maschinen mit zwei Spindeln auf einem Schlitten auszurüsten, sodass eine Spindel be-/entladen werden kann, während die andere zur Bearbeitung genutzt wird. Auch sind horizontal verfahrbare Spindeln bekannt.
Aus der DE 10 201 1 1 19 787 ist ein Doppelspindler mit vertikalen Drehachsen bekannt, der nach dem Pickupverfahren mit verfahrbaren Spindeln arbeitet.
Die Verfahrbarkeit der Spindeln bringt jedoch Nachteile mit sich. Darüber hinaus ist insbesondere auch eine weitere Stabilisierung der Werkstücke während der spanenden Bearbeitung wünschenswert, dies erfordert bei einer Anordnung nach der DE 10 201 1 1 19 787 einen erhöhten Synchronisationsaufwand.
Dies zu ermöglichen und die genannten Nachteile zu vermeiden, ist Aufgabe der vorliegenden Erfindung.
Gelöst wird die Aufgabe durch eine Drehmaschine gemäß Anspruch 1 und ein Verfahren gemäß Anspruch 9. Die Unteransprüche 2 bis 8 und 10 bis 13 geben vorteilhafte Weiterbildungen an.

Gelöst wird die Aufgabe vorrichtungsgemäß durch eine Drehmaschine nach dem beigefügten Anspruch 1.

Dabei sind die Spindeln synchron mitgeführt werden. Des Weiteren ergeben sich bei verfahrbaren Spindeln, Nachteile bei kraftaufwendigen Bearbeitungen und ist der verfügbare Bauraum, beispielsweise für weitere Werkzeuge sehr beschränkt oder nur schwer ausreichend stabil zu erreichen. Darüber hinaus sind beim gleichzeitigen Einsatz mehrerer Werkzeuge wieder aufwendige Synchronisationsmaßnahmen erforderlich, sofern ein solcher Einsatz bei der bekannten Konstruktion überhaupt möglich ist.
Dies zu ermöglichen und die genannten Nachteile zu vermeiden, ist Aufgabe der vorliegenden Erfindung.
Gelöst wird die Aufgabe durch eine Drehmaschine gemäß Anspruch 1 und ein Verfahren gemäß Anspruch 9. Die Unteransprüche 2 bis 8 und 10 bis 13 geben vorteilhafte Weiterbildungen an.
Gelöst wird die Aufgabe vorrichtungsgemäß durch eine Drehmaschine zur spanenden Bearbeitung von Werkstücken mit hauptzeitparalleler Be- und Entladung und der Möglichkeit der vier-achsigen Bearbeitung, aufweisend mindestens zwei Arbeitsspindeln mit jeweils einer Aufnahme für ein Werkstück, wobei die Rotationsachsen der Arbeitsspindeln vertikal verlaufen und mit mindestens einem Werkzeugträger. Dabei sind die Spindeln stationär an der Drehmaschine angeordnet, in dieser also nicht verfahrbar, insbesondere starr mit ihr verbunden. Der Werkzeugträger ist mindestens zur Ausführung von zweiachsigen Vorschubbewegungen senkrecht und parallel zu den Rotationsachsen der Arbeitsspindeln und zur Aufnahme mindestens eines Werkzeuges ausgebildet. Somit verfügt der Werkzeugträger über Bewegungsfreiheit zumindest in vertikaler und in einer horizontalen Richtung. Dies kann beispielsweise über einen Kreuzschlitten realisiert werden. Der Kreuzschlitten ist dabei insbesondere so eingerichtet, dass er auch geeignet ist, den Werkzeugträger von einer Position zur Bearbeitung eines ersten in einer ersten Aufnahme aufgenommenen Werkstückes in eine Position zur Bearbeitung eines zweiten in einer zweiten Aufnahme aufgenommenen Werkstückes zu verfahren.

Unter vier-achsiger Bearbeitung ist dabei die insbesondere gleichzeitige Bearbeitung eines in einer Spindel befindlichen Werkstücks, mit zwei jeweils in zwei senkrecht zu einander stehenden Achsen beweglichen Schlitten oder Werkzeugen zu verstehen. Dabei sind die vier Achsen insbesondere paarweise parallel.

Darüber hinaus weist die Drehmaschine mindestens einen Be- und Entladeautomaten zur Beladung der Aufnahmen mit den Werkstücken und zur Entladung der Werkstücke aus den Aufnahmen auf. Hier wird also nicht mit einem Pick-up der Werkstücke gearbeitet, was auf Grund der stationären Spindeln nicht möglich wäre, sondern werden die Werkstücke durch den Be- und Entladeautomaten in die Aufnahmen eingesetzt.

Des Weiteren ist der Werkzeugträger derart verfahrbar ausgebildet ist, dass er sowohl ein in einer ersten der Aufnahme aufgenommenes Werkstück als auch ein in einer zweiten der Aufnahmen aufgenommenes Werkstück mit seinem mindestens einen Werkzeug bearbeiten kann. Mit einer solchen Drehmaschine kann eine hauptzeitparallele Be- und Entladung von zwei Arbeitsspindeln abwechselnd durchgeführt werden. Somit kann die Be- und Entladung einer ersten der Arbeitsspindeln sich mit der Bearbeitung eines Werkstücks aufgenommen in der Aufnahme einer zweiten der Arbeitsspindeln zeitlich überschneiden. Ein solches Verfahren kann auch mit mehr als zwei Arbeitsspindeln durchgeführt werden, wobei sich die Bearbeitung und die Be- und Entladezeiten zeitlich überschneiden, zumindest jeweils in Bezug auf zwei der Arbeitsspindeln. Auch können weitere Arbeitsschritte, beispielsweise mit weiteren vorgesehenen Werkzeugen oder Werkzeugträgern vorgesehen sein, die sich ebenfalls zeitlich mit der spanenden Bearbeitung und/oder dem Be- und Entladevorgang überschneiden können.

Darüber hinaus weist die Drehmaschine zumindest eine Arbeitsplattform auf, insbesondere eine Arbeitsplattform pro Arbeitsspindel. Die Arbeitsplattform ist dadurch gekennzeichnet, dass sie parallel zur Rotationsachse der Arbeitsspindeln verfahrbar ist. Insbesondere ist jede Arbeitsplattform einer der Arbeitsspindeln zugeordnet und parallel zu dieser verfahrbar. Die Zuordnung kann neben der parallelen Verfahrbarkeit, die in der Regel zu allen Arbeitsspindeln gegeben sein wird, zusätzlich durch die räumliche Nähe zur Rotationsachse, die Ansteuerung und/oder die Orientierung der Aufnahmeplattform zur Rotationsachse der Arbeitsspindel bestimmt sein. Bevorzugt wird eine Arbeitsplattform der Arbeitsspindel als zugeordnet angesehen, die die größte räumliche Nähe in Bezug auf ihre Rotationsachse aufweist.

Insbesondere ist die Drehmaschine dadurch gekennzeichnet, dass mit einem im Werkzeugträger aufgenommenen Werkzeug und einem auf einer Arbeitsplattform montierten Werkzeug ein gleichzeitiges Bearbeiten des in der ersten Aufnahme aufgenommenen Werkstück möglich ist. Dabei ist die Arbeitsplattform insbesondere mit einer einachsigen oder zweiachsigen Verschiebevorrichtung zur Verschiebung des Werkzeugs rechtwinklig zur Rotationsachse der Arbeitsspindeln, also in der horizontalen Ebene, eingerichtet.

Mit besonderem Vorteil weist die Drehmaschine mindestens zwei Arbeitsplattformen auf, wobei eine erste Arbeitsplattform mit einer einachsigen Verschiebevorrichtung zur Verschiebung rechtwinklig zur Rotationsachse der Arbeitsspindeln, also in der horizontalen Ebene, eines Werkzeugs ausgerüstet ist und eine zweite Arbeitsplattform ein Sonderwerkzeug, insbesondere einen Bohrkopf, insbesondere Mehrfachbohrkopf, aufweist und ist insbesondere die Drehmaschine so eingerichtet, dass mit einem auf der Verschiebevorrichtung der ersten Arbeitsplattform montierten oder aufgenommenen Werkzeug und mit einem Werkzeug des Werkzeugträgers ein gleichzeitiges Bearbeiten des in einer ersten Aufnahme aufgenommenen Werkstück möglich ist und gleichzeitig ein in einer zweiten Aufnahme aufgenommenes Werkstück mit dem (Mehrfach-)Bohrkopf bearbeitet wird. Anstelle des (Mehrfach-)Bohrkopfs sind auch andere Sonderwerkzeuge auf der zweiten Arbeitsplattform möglich. Dann ist die Drehmaschine insbesondere zur Bearbeitung eines in der zweiten Aufnahme aufgenommenen Werkstücks mit dem Sonderwerkzeug während der Bearbeitung durch ein auf der ersten Arbeitsplattform montiertes oder aufgenommenes Werkzeug und der Bearbeitung mit einem Werkzeug des Werkzeugträgers des in einer ersten Aufnahme aufgenommenen Werkstücks eingerichtet.

Die Arbeitsplattform ist zur insbesondere auswechselbaren Aufnahme von Werkzeugen, Zentriermitteln, Werkzeughaltern, Werkzeugrevolvern, Zentriermittelhaltern, Reitstockelementen, Mehrfachbohr- und -fräsköpfen oder -vorrichtungen, Messeinrichtungen und/oder Verschiebevorrichtung eingerichtet oder mit solchen versehen. Die Verschiebevorrichtung kann linear ein oder zweiachsig und/oder rotativ ausgebildet sein und ist insbesondere zur insbesondere auswechselbaren Aufnahme von Werkzeugen, Zentriermitteln, Werkzeughaltern, Werkzeugrevolvern, Zentriermittelhaltern, Reitstockelementen, Mehrfachbohr- und -fräsköpfen oder -vorrichtungen, Messeinrichtungen eingerichtet oder mit solchen versehen. Die Werkzeuge, die an der Arbeitsplattform direkt, in einem Werkzeughalter oder über die Verschiebevorrichtung festgelegt oder festlegbar sind, können dabei zur End- und/oder Umfangsbearbeitung eingerichtet sein. Insbesondere ist unter diesen Werkzeugen mindestens ein Werkzeug zum Plan-, Längst-,Gewinde-, Einstech-,Innendrehen, Rändeln, Rollieren und/oder Drehschälen festgelegt oder festlegbar sein. Möglich ist auch alternative oder zusätzlich mindestens ein angetriebenes Werkzeugen zur Erstellung von Bohrungen, Flächen, Nuten am Werkstück festgelegt oder festlegbar ist. Auch alternativ oder zusätzlich können Sonderwerkzeugen, insbesondere Werkzeuge mit mehreren Schneiden festgelegt oder festlegbar sein. Auch festlegbar oder festgelegt sein können Mehrfachbohrund -fräsköpfen oder -vorrichtung, ein Werkzeugrevolver zur Aufnahme solcher Werkzeuge und/oder ein Zentriermittel, ein Zentriermittelhaltern, ein Reitstockelementen und/oder eine Verschiebevorrichtung an der Arbeitsplattform angeordnet und/oder anordbar. Insbesondere ist an der Arbeitsplattform eine Vorrichtung zur Auswechslung oder zur Verschiebung der Komponenten vorgesehen. Insbesondere kann die Verschiebungvorrichtung so ausgebildet und montiert sein, dass Aufnahmen für Werkzeuge Reitstockelemente und/oder Zentriermittel und/oder Zentriermittel, Reitstockelemente und/oder Werkzeuge und/oder Messeinrichtungen, die auf der Verschiebevorrichtung angeordnet sind, in Flucht mit der Rotationsachse der Arbeitsspindel und oder symmetrisch zur Rotationsachse der Arbeitsspindel durch Verfahren der Verschiebevorrichtung gebracht werden können.

Alternativ oder zusätzlich kann die Verschiebevorrichtung zur Bewirkung einer ein- oder zweiachsigen Vorschubbewegung, insbesondere senkrecht zur Rotationsachse der Arbeitsspindeln zur spanenden Bearbeitung eines in einer Spindel aufgenommenen Werkstücks eingerichtet sein.

Insbesondere kann die Arbeitsplattform zur Aufnahme einer zumindest ein- oder zweiachsige Verschiebevorrichtung mit darin fest montiertem Werkzeug zum drallfreien Schäldrehen ausgebildet sein oder eine solche Verschiebevorrichtung mit Werkzeug zum Drall freien Schäldrehen auf der Arbeitsplattform angeordnet sein. Die eine oder zwei Achsen der Verschiebeeinheit sind dabei insbesondere senkrecht zu den Rotationsachsen der Arbeitsspindeln angeordnet. Unter einer Achse einer Verschiebevorrichtung ist eine solche zu verstehen, in deren und/oder gegen diese Richtung die Verschiebevorrichtung eine Bewegung bewirken kann.

Vorteilhafterweise ist die Arbeitsplattform in einem Abstand von maximal 500mm, insbesondere maximal 300mm zur Rotationsachse einer, insbesondere der zugeordneten Arbeitsspindel entfernt angeordnet. Insbesondere befindet sie sich in einem Abstand von 150 mm bis 350mm, insbesondere von mindestens 200mm und/oder maximal 250mm von der Rotationsachse einer, insbesondere der zugeordneten Arbeitsspindel. Vorzugsweise ist die Arbeitsplattform zur besseren Aufnahme der Kräfte rechteckig ausgeführt und in Achsrichtung der Rotationsachse länger. Vorteilhafterweise im Verhältnis 1,5:2, insbesondere mit kürzerer Kante von 200 bis 400 mm, insbesondere in den Abmessungen 300x400mm.

Zur entsprechenden Ansteuerung kann die Drehmaschine eine entsprechende Steuerung aufweisen. Diese kann insbesondere eingerichtet sein, ein erfindungsgemäßes Verfahren mit der Drehmaschine zu bewirken.

Durch die Vorsehung von vertikal angeordneten Arbeitsspindeln kann die Stabilität der Bearbeitung erhöht werden und ist eine raumsparende Anordnung mehrerer Arbeitsspindeln möglich. Drehschwingungen der Spindeln werden durch diese Anordnung direkt in den Maschinengrundkörper eingeleitet und absorbiert. Darüber hinaus kann durch die Verwendung eines Reitstockes die Stabilität weiter gefördert werden. Auch können weitere Werkzeuge zur zeitgleichen Bearbeitung vorgesehen werden und ist das Vorsehen der erfindungsgemäßen Arbeitsplattform möglich.
Es ist aber auch möglich auf die Arbeitsplattform zu verzichten oder nur einen Reitstock vorzusehen. Auch dadurch ergeben sich schon zahlreiche der geschilderten Vorteile.
Vorteilhafterweise ist gemäß Anspruch 2 die mindestens eine Arbeitsplattform zur auswechselbaren Aufnahme von mindestens einem Werkzeug, einem Werkzeugträger, einer Verschiebevorrichtung, eines Zentriermittels und/oder einer Zentriermittelaufnahme eingerichtet

Vorteilhafterweise ist gemäß Anspruch 5 mindestens einer oder jeder Arbeitsspindel ein auf der Rotationsachse der zugeordneten Arbeitsspindel verfahrbarer Reitstock zugeordnet. Dabei sind die Aufnahme und der Reitstock der Arbeitsspindel so eingerichtet, dass ein Werkstück an zwei Enden gehalten bzw. gestützt werden kann. In der Regel wird das Werkstück in der Aufnahme gehalten und vom Reitstock der jeweiligen Arbeitsspindel gestützt.
Durch die erfindungsgemäße Anordnung von Arbeitsspindeln mit Reitstöcken und Be- und Entladeautomatik ist dabei eine hauptzeitparallele Be- und Entladung möglich. Der Reitstock ist dabei auf der Rotationsachse der zugehörigen Arbeitsspindel verfahrbar angeordnet, um sich von einem aufgenommenen Werkstück lösen zu können bzw. ein in der Aufnahme aufgenommenes Werkstück unterstützen zu können. Jeweils zur Be- und Entladung wird daher der Reitstock entlang der Rotationsachse verfahren.
Vorteilhafterweise umfasst der mindestens eine Be- und Entladeautomat mindestens einen Roboterarm. Durch einen Roboterarm kann auf einfache und flexible Weise ein solcher Be- und Entladeautomat realisiert werden. So kann ein Roboterarm beispielsweise eingerichtet sein, ein Werkstück von einer Zuführung, beispielsweise einem Fließband, aufzunehmen und in die Aufnahme einer Arbeitsspindel einzusetzen, sowie nach der Bearbeitung das Werkstück wieder zu entnehmen und auf eine Abführung, beispielsweise ebenfalls ein Fließband oder das gleiche Fließband, zu setzen.
Denkbar ist es aber auch pro Arbeitsspindel ein oder zwei Roboterarme als Beund Entladeautomat vorzusehen. In einer solchen Ausgestaltung ist es möglich, die pro Werkstück benötigte Zeitspanne weiter zu verkürzen, insbesondere wenn die Dauer der spanenden Bearbeitung vergleichsweise kurz ist. So kann beispielsweise ein Roboterarm pro Arbeitsspindel für die Be- und Entladung vorgesehen sein und Werkstücke von einer Zuführung in die Aufnahme einsetzen und von der Aufnahme zu einer Abführung überbringen. Es ist jedoch auch möglich, für die Be- und Entladung einer Arbeitsspindel jeweils zwei Roboterarme vorzusehen. So kann beispielsweise ein Roboterarm für die Beladung und ein Roboterarm für die Entladung vorgesehen werden. Dadurch lässt sich die notwendige Zeitdauer weiter verkürzen. In einem solchen Fall ist es beispielsweise denkbar, die jeweils für eine Arbeitsspindel vorgesehenen Roboterarme von unterschiedlichen Seiten der Arbeitsspindel aus arbeiten zu lassen und beispielsweise einen Fluss der Werkstücker von der einen Seite der Arbeitsspindel mit dem Roboterarm zur Arbeitsspindel auf die andere Seite der Arbeitsspindel unter Verwendung des zweiten Roboterarmes einzurichten.
Dementsprechend wären die Roboterarme vorteilhafterweise in Bezug auf die Rotationsachse der Arbeitsspindel in unterschiedlichen Halbräumen, insbesondere diametral gegenüberliegend oder zumindest um mindestens 90° versetzt, anzuordnen.

Denkbar ist es aber auch, gemäß Anspruch 7 jeweils pro zwei Arbeitsspindeln nur ein Roboterarm als Be- und Entladeautomat vorzusehen. Dabei kann der eine Roboterarm zur Be- und Entladung einer Arbeitsspindel verwendet, während die zweite Arbeitsspindel zur spanenden Bearbeitung genutzt wird. Im Anschluss daran wird dann die Verwendung des Roboterarmes und insbesondere auch des Werkzeugträgers zwischen den Arbeitsspindeln gewechselt.

Mit besonderem Vorteil ist pro Arbeitsspindel ein verfahrbares Schott vorgesehen. Das Schott und die Vorrichtung zur Realisierung der Verfahrbarkeit des Schotts sind dabei jeweils so ausgeführt, dass das Schott derart verfahren werden kann, dass es die Aufnahme der jeweiligen Arbeitsspindel vor fliegenden Spänen einer zeitgleich stattfindenden Bearbeitung, insbesondere eines in einer benachbarten Arbeitsspindel aufgenommenen Werkstückes, schützen kann und zur Bearbeitung eines in der zugeordneten Arbeitsspindel aufgenommenen Werkstückes den Zugriff für mindestens ein Werkzeug des mindestens einen Werkzeugträgers auf das in der zugeordneten Arbeitsspindel aufgenommene Werkstück freigibt.

Durch derartige Vorkehrungen kann die Verdreckung der Aufnahmen mit Spänen und anderem Material verringert oder verhindert werden.

Darüber hinaus ist es vorteilhaft, Tore zum Verschließen des Arbeitsraumes und zum Gewähren von Zugriff zu den Aufnahmen vorzusehen. Insbesondere kann für jede Arbeitsspindel ein entsprechendes Tor vorgesehen werden, das während der Bearbeitung eines aufgenommenen Werkstückes geschlossen ist und dadurch den Arbeitsraum insbesondere abschließt. Zur Be- und Entladung kann das Tor dann vorteilhafterweise geöffnet werden und insbesondere dem Roboterarm Zugriff zum Werkstück gewähren.

Gelöst wird die Aufgabe auch durch ein Verfahren zur spanenden Bearbeitung von in Arbeitsspindeln mit vertikalen Rotationsachsen aufgenommenen Werkstücken, wobei mindestens zwei Arbeitsspindeln mit vertikalen Rotationsachsen und jeweils einer Aufnahme zur Aufnahme eines der Werkstücke vorgehalten werden. Darüber hinaus wird mindestens ein Be- und Entladeautomat vorgehalten.

Gekennzeichnet ist das durch folgende Merkmale:
Zur Beladung der Arbeitsspindeln wird jeweils mit dem mindestens einen Be- und
Entladeautomat ein Werkstück aufgenommen und in die Aufnahme der zu beladenden Arbeitsspindel verbracht.

Zur Entladung der Arbeitsspindel wird mit dem mindestens einen Be- und Entladeautomaten das zu entladende Werkstück aufgenommen und aus der Aufnahme der zu entladenden Arbeitsspindel entfernt.
Dabei überschneidet sich die Ent- und Beladung von Werkstücken in der Aufnahme einer ersten der Arbeitsspindel zeitlich mit der Bearbeitung eines Werkstückes in der Aufnahme einer zweiten der Arbeitsspindeln.
Ein Werkzeug des mindestens einen Werkzeugträgers wird zur Bearbeitung von in der ersten Aufnahme aufgenommenen Werkstücken und in der zweiten Aufnahme aufgenommenen Werkstücke zeitlich nacheinander verwendet.
So kann zeitlich effizient und auf platzsparende Art und Weise sowie zuverlässig und stabil eine hauptzeitparallele spanende Bearbeitung eines um eine horizontale Achse drehenden Werkstückes erfolgen, wobei das Werkstück zweiseitig gestützt sein kann. Dabei erfolgt die Bearbeitung von in unterschiedlichen Arbeitsspindeln aufgenommenen Werkstücken durch Werkzeuge eines verfahrbaren Werkzeugträgers, jedenfalls in Bezug auf zwei Arbeitsspindeln.
Dies ermöglicht auf kleinem Raum und mit vergleichsweise geringem Investitionsaufwand eine durchsatzstarke spanende Bearbeitung von Werkstücken bei gleichzeitig hoher Flexibilität.
Vorteilhafterweise findet der Betrieb der einzelnen Arbeitsspindeln, insbesondere ihre Be- und Entladung sowie die spanende Bearbeitung, zwischen den einzelnen Arbeitsspindeln zeitlich phasenversetzt statt. Der Phasenversatz ist insbesondere symmetrisch zwischen den einzelnen Arbeitsspindeln verteilt. Werden beispielsweise zwei Arbeitsspindeln eingesetzt, so ist vorteilhafterweise ein Phasenversatz von 180° zu wählen. Bei mehreren Arbeitsspindeln ist dies vorteilhafterweise entsprechend abweichend symmetrisch zu verteilen. So kann bei drei Arbeitsspindeln insbesondere ein Versatz von 120° gewählt werden.

Mit Vorteil beinhaltet das Verfahren das Vorhalten eines auf der Rotationsachse der jeweiligen Arbeitsspindel verfahrbarer Reitstock für mindestens eine Arbeitsspindel oder pro vorgehaltener Arbeitsspindel. In diesem Fall wird zum Beladen der Arbeitsspindeln mit zugeordnetem Reitstock jeweils nach dem Aufnehmen des Werkstücks in der Aufnahme der zu beladenen Arbeitsspindel der Reitstock der zu beladenen Arbeitsspindel in Richtung zur Aufnahme der zu beladenden Arbeitsspindel hin bis zum Stützen des Werkstückes in der Aufnahme der zu beladenden Arbeitsspindel auf die Aufnahme der zu beladenden Arbeitsspindel hin bewegt. Auch wird wird zum Entladen der Arbeitsspindeln mit zugeordnetem Reitstock jeweils vor dem Aufnehmen des zu entladende Werkstücks mit dem mindestens einen Be- und Entladeautomaten der Reitstock der zu entladenden Arbeitsspindel von der Aufnahme der zu entladenden Arbeitsspindel weg bewegt.

Mit Vorteil kann mindestens eine erste der Arbeitsspindel keinen zugeordneten Reitstock aufweist oder, falls eine solcher vorhanden ist nicht genutzt werden und ein zu bearbeitendes Werkstück zunächst in die Aufnahme der ersten Arbeitsspindel geladen werden und insbesondere zumindest, insbesondere ausschließlich eine Planseitenbearbeitung, Zentrierung, Futterbearbeitung und oder Stirnseitenbearbeitung einer ersten Seite des aufgenommenen Werkstücks (8) durchgeführt werden. Anschließend kann das Werkstück in eine Aufnahme einer zweiten Arbeitsspindel mit zugeordnetem Reitdorn geladen werden. Dies erfolg durch Entladen aus der ersten Arbeitsspindel und Beladen der zweiten Arbeitsspindel, wobei die Vorgänge des Entladens der ersten und Beladens der zweiten Arbeitsspindel auch von einem gemeinsamen Be- und Entladeautomaten, insbesondere Robotorarm durchgeführt werden können, insbesondere ohne das Werkstück zwischen Entladen der ersten und Beladen der zweiten Arbeitsspindel abzustellen. Somit stellt das Aufnehmen des Werkstücks zur Entladung insbesondere auch das Aufnehmen des Werkstücks zum Beladen dar. Vorteilhafterweise wird das Werkstück zum Beladen der zweiten Arbeitsspindel an der ersten Seite des Werkstücks mit dem Reitdorn der zweiten Arbeitsspindel durch Verfahren des Reitdorns auf die Aufnahme der zweiten Arbeitsspindel zu gestützt, insbesondere durch Ausnutzung von bei der Bearbeitung in der ersten Arbeitsspindel geschaffenen Strukturen.

Mit Vorteil kann ein Roboterarm als Be- und Entladeautomat für die Be- und Entladung von zwei Aufnahmen verwendet werden. Auch mehrere Roboterarme lassen sich für die Be- und Entladung von zwei Aufnahmen verwenden. So kann beispielsweise, auch bei mehreren Arbeitsspindeln, pro Aufnahme ein Roboterarm zur Be- und Entladung verwendet werden oder pro Aufnahme auch ein Roboterarm zur Beladung und ein Roboterarm zur Entladung verwendet werden. Mit Vorteil kann bei Be- und Entladung durch unterschiedliche Roboterarme eine Beladung von einer Seite, insbesondere aus einem Halbraum in Bezug auf die Rotationsachse der Aufnahme und die Entladung aus einem anderen Halbraum bzw. von einer anderen Seite, insbesondere von diametral gegenüberliegend, oder zumindest um mindestens 90° versetzt, erfolgen.

Dadurch lässt sich die für die Be- und Entladung benötigte Zeitspanne weiter reduzieren.

Mit besonderem Vorteil wird jeder Arbeitsspindel ein verfahrbares Schott zugeordnet und die Schotte jeweils so verfahren, dass während der Be- und Entladung der zugeordneten Arbeitsspindel das Schott der zu be- oder entladenden Arbeitsspindel so angeordnet ist, dass es den Flug von Spänen in die Aufnahme der zu be- und entladenden Arbeitsspindel hindert, insbesondere zumindest während eine Bearbeitung, insbesondere eines in einer benachbarten Aufnahme aufgenommenen Werkstückes, durchgeführt wird, und vor der Bearbeitung eines in eine Aufnahme einer Arbeitsspindel aufgenommenen Werkstückes das zugeordnete Schott so bewegt wird, dass der Zugang zum aufgenommenen Werkstück für mindestens ein Werkzeug des mindestens einen Werkzeugträgers freigegeben wird.

Durch ein solches Vorgehen lassen sich Aufnahmen bei der Be- und Entladung und auch entsprechende Be- und Entladeautomaten vor Verschmutzung und Verdreckung schützen.

Vorteilhafterweise können Tore, insbesondere jeweils eins pro Arbeitsspindel vorgesehen werden, die während der Bearbeitung eines in der jeweiligen Aufnahme der jeweiligen Arbeitsspindel aufgenommenen Werkstückes geschlossen gehalten werden und so insbesondere den Arbeitsraum nach außen hin bzw. zur Zu- und Abführung hin verschließen. Zur Be- und Entladung der jeweiligen Arbeitsspindel wird dann das Tor jeweils geöffnet, insbesondere anschließend wieder verschlossen.

Mit besonderem Vorteil wird nach einem Beladen oder vor einem Entladen eines zweiten Werkstücks in eine zweite oder aus einer zweiten Arbeitsspindel mittels eines an einer vertikal verfahrbaren Arbeitsplattform festgelegtem Werkzeug, insbesondere Sonderwerkzeug wie oben beschrieben, insbesondere eines Mehrfachbohrkopfes, eine Bearbeitung des in der zweiten Arbeitsspindel aufgenommenen zweiten Werkstücks insbesondere einer Stirnfläche des zweiten Werkstücks durchgeführt wird, insbesondere der Art, das mehrere Bohrungen gleichzeitig hergestellt werden, während ein erstes Werkstück, in einer ersten Arbeitsspindel aufgenommen zerspannend bearbeitet wird, insbesondere von einem Werkzeug des Werkzeugträgers. Die zerspanende Bearbeitung kann auch durch ein an einer zweiten vertikal verfahrbaren Arbeitsplattform festgelegten Werkzeug erfolgen oder mit Vorteil durch sowohl ein Werkzeug des Werkzeugträgers als auch ein an einer zweiten vertikal verfahrbaren Arbeitsplattform festgelegtes Werkzeug, insbesondere gleichzeitig, erfolgen. In Bezug auf die Arbeitsplattformen und ihre Ausbildung und Verwendung sind die als vorteilhaft geschilderten Merkmale übertragbar.

Mit Vorteil wird an Werkstücken aufgenommen in einer zweiten Arbeitsspindel nur mit zerspanend gearbeitet, und wird an Werkstücken aufgenommen in einer ersten Arbeitsspindel mit Werkzeugen des Werkzeugträgers und Werkzeugen aufgenommen an einer vertikal verfahrbaren Arbeitsplattform vierachsig zerspant. In Bezug auf die Arbeitsplattform und ihre Ausbildung und Verwendung sind die als vorteilhaft geschilderten Merkmale übertragbar.

So lassen sich die Bearbeitungszeiten verkürzen und Zeiten zum Transport und Einspannen der Werkstücke vermeiden oder verkürzen.

Weitere vorteilhafte Ausführungen sollen rein exemplarisch und nicht beschreibend anhand der nachfolgenden Beispiele geschildert werden. Dazu zeigen rein schematischen die Figuren:
- Fig. 1: eine rückwärtige Ansicht einer erfindungsgemäßen Drehmaschine mit zwei Arbeitsspindeln und einem Roboterarm;
- Fig. 2: eine Detailansicht des Roboterarmes mit einem Ausschnitt der erfindungsgemäßen Drehmaschine aus Fig. 1;
- Fig. 3: eine Ansicht des Arbeitsraumes der erfindungsgemäßen Drehmaschine aus Fig. 1 während der spanenden in Bearbeitungsposition mit der rechte Arbeitsspindel;
- Fig. 4: eine Ansicht des Arbeitsraumes der Fig. 1 in einem abweichenden Betriebszustand in Bearbeitungsposition mit der linken Arbeitsspindel;
- Fig. 5: eine Ansicht einer erfindungsgemäßen Drehmaschine mit zwei Arbeitsspindeln und zwei Arbeitsplattformen;
- Fig. 6: eine Ansicht des Arbeitsraums der Drehmaschine aus Fig. 5 und
- Fig. 7: eine seitliche Ansicht der Drehmaschine aus Fign. 5 und 6.

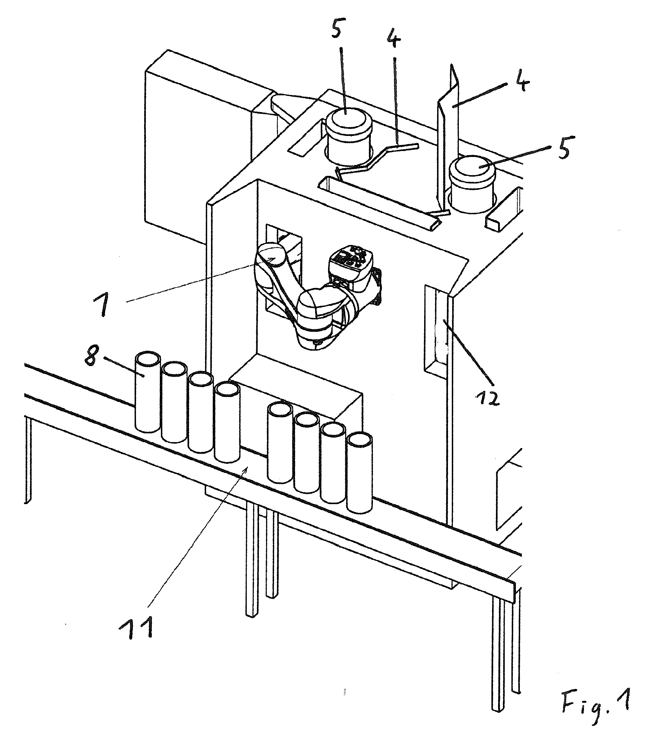

Fig. 1 zeigt eine rückwärtige Ansicht einer erfindungsgemäßen Drehmaschine aufweisend einen Roboterarm 1, zwei Schottbleche 4 sowie zwei Antriebe 5 und Tore 12. Darüber hinaus gezeigt ist ein Fließband 11 mit Werkstücken 8. Zu erkennen ist, dass die Drehmaschine über zwei Öffnungen für den Eingriff des Roboterarmes 1 verfügt, die durch Tore 12 verschlossen werden können. Darüber hinaus sind jeder Arbeitsspindel ein Antrieb 5 und ein Schottblech 4 zuordnet. Die Schottbleche 4 sind dabei horizontal verfahrbar. In dem in Fig. 1 gezeigten Betriebszustand der Drehmaschine wird die Arbeitsspindel, die vom rechts in der Figur gezeigten Antrieb 5 getrieben wird, verwendet, um eine spanende Bearbeitung durchzuführen. Dafür ist das Tor 12 verschlossen und ist das Schottblech 4 nach oben heraus verfahren. Der nicht gezeigte Werkzeugträger bearbeitet zurzeit mit einem Werkzeug das in der Arbeitsspindel eingespannte und vom Antrieb 5 angetriebene Werkstück 8. Die in der Figur links angeordnete aber nicht gezeigte Arbeitsspindel mit dem in der Figur links gezeigten Antrieb 5 wird zurzeit mit einem Werkstück 8 bestückt, das zuvor vom Fließband 11 entnommen wurde. Dazu befindet sich der Roboterarm 1 innerhalb des Arbeitsraumes und ist das linke, nicht gezeigte Tor 12 zum Arbeitsraum geöffnet und das linke Schottblech 4 herabgelassen, sodass es die Aufnahme der linken Arbeitsspindel vor Spänen der Bearbeitung des Werkstückes, das in der rechten Arbeitsspindel aufgenommen ist, schützt.

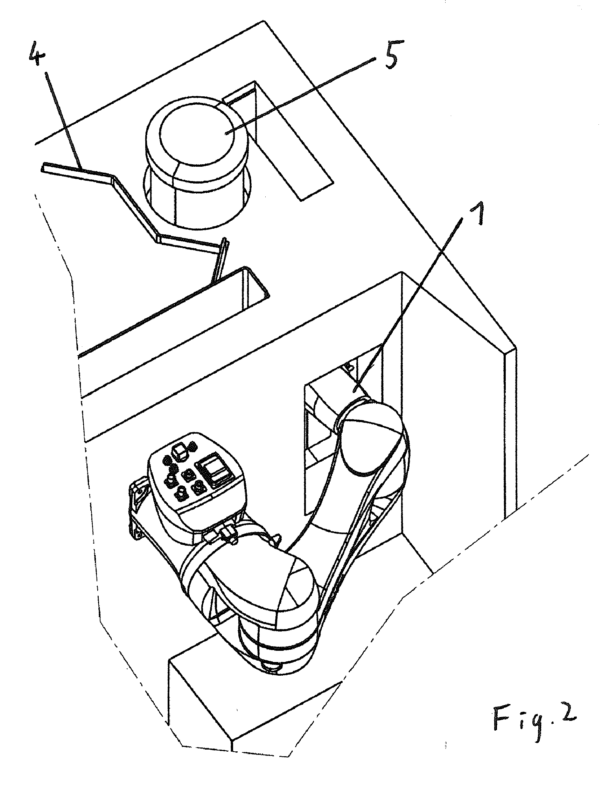

Fig. 2 zeigt einen Detailausschnitt der Drehmaschine aus Fig. 1, jedoch in abweichendem Betriebszustand. In Fig. 2 gezeigt ist der Zustand, in dem der Roboterarm die in Fig. 1 rechts befindliche Arbeitsspindel neu belädt und dazu das in der Fig. 1 rechts angeordnete Schottblech 4 sich im heruntergelassenen Zustand befindet und somit die von dem in Fig. 2 gezeigten Antrieb 5 angetriebene Aufnahme vor Spänen und Verdreckung schützt. Der Roboterarm 1 befindet sich dazu im Arbeitsraum.

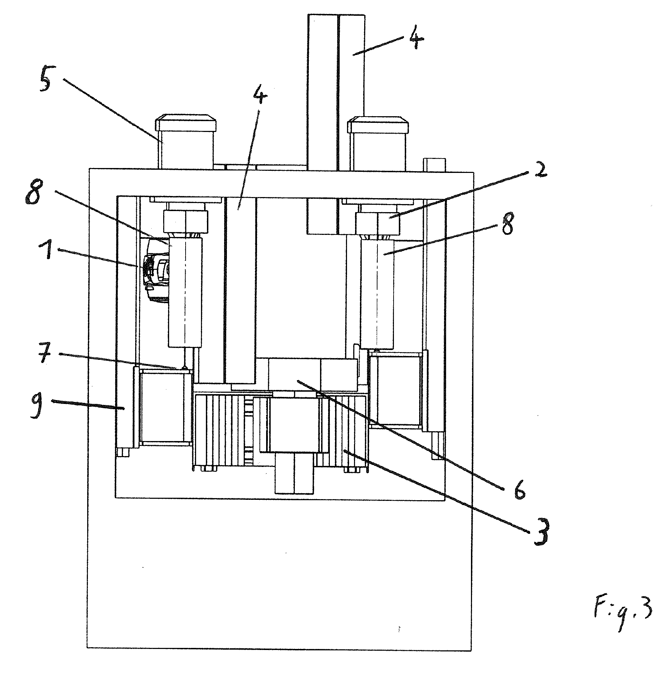

Fig. 3 zeigt eine Ansicht des Arbeitsraumes der in Figuren 1 und 2 gezeigten Drehmaschine. Zu erkennen sind die Schottbleche 4, die Antriebe 5 sowie die Aufnahmen 2 und der Roboterarm 1. Darüber hinaus zu erkennen sind zwei Reitstockschlitten 9 mit jeweils einem Reitstock7. Des Weiteren gezeigt sind in den Aufnahmen 2 aufgenommene Werkstücke 8. Im gezeigten Betriebszustand wird das in der Fig. 3 rechts befindliche Werkstück 8 von einem Werkzeug des Werkzeugträgers 6 bearbeitet. Dazu ist das in der Figur 3 rechts gezeigte Schottblech 4 nach oben verfahren, um das Werkstück 8 zur Bearbeitung freizugeben. Das linke in der Fig. 3 gezeigte Werkstück 8 soll im dargestellten Betriebszustand vom Roboterarm 1, der durch die rückseitige Öffnung in den Arbeitsraum 10 eingreift, entnommen werden. Dazu ist das Tor geöffnet und das linke Schottblech 4 zum Schutz vor Spänen der Bearbeitung des rechten Werkstückes 8 heruntergelassen. Darüber hinaus zu erkennen ist der Kreuzschlitten 3, mit dem der Werkzeugträger horizontal und vertikal verfahrbar angeordnet ist. Dadurch kann der Werkzeugträger 6 auch zwischen einer Bearbeitung eines in der rechten Aufnahme 2 eingespannten Werkstückes 8 und der Bearbeitung eines in der linken Aufnahme 2 aufgenommenen Werkstückes 8 verfahren werden. Zu erkennen ist auch, dass der rechte Reitstock 7 unter Verwendung seines Reitstockschlittens 9 nach oben gefahren ist, sodass er das Werkstück 8 zur Bearbeitung stützen kann. Demgegenüber ist der links in Fig. 3 gezeigte Reitstock 7 mit seinem Reitstockschlitten 9 nach unten verfahren, um eine Entnahme des in der Fig. 3 links gezeigten Werkstückes 8 aus der in Fig. 3 links gezeigten Aufnahme 2 durch den Roboterarm 1 zu ermöglichen.

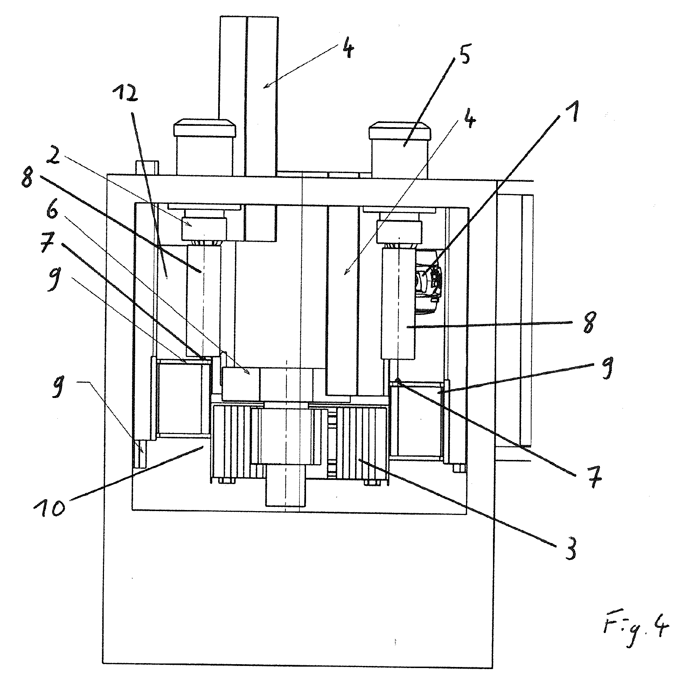

Fig. 4 zeigt eine Ansicht des Arbeitsraumes aus Fig. 3, jedoch in einem abweichenden Betriebszustand. Im hier gezeigten Zustand wird das in Fig. 4 links gezeigte Werkstück 8 bei geschlossenem Tor 12 und an das Werkstück 8 herangefahrenem Reitstock 7 und geöffnetem Schottblech 4 von einem Werkzeug des Werkzeugträgers 6 spanend bearbeitet. Währenddessen wird das rechts in der Fig. 4 gezeigte Werkstück 8 vom Roboterarm 1 bei geöffnetem Tor aus der in der Fig. 4 rechts gezeigten Aufnahme 2 entfernt. Dazu ist der in Fig. 4 rechts gezeigte Reitstock 7 unter Verwendung seines Reitstockschlittens 9 nach unten verfahren, um eine Entnahme zu ermöglichen.

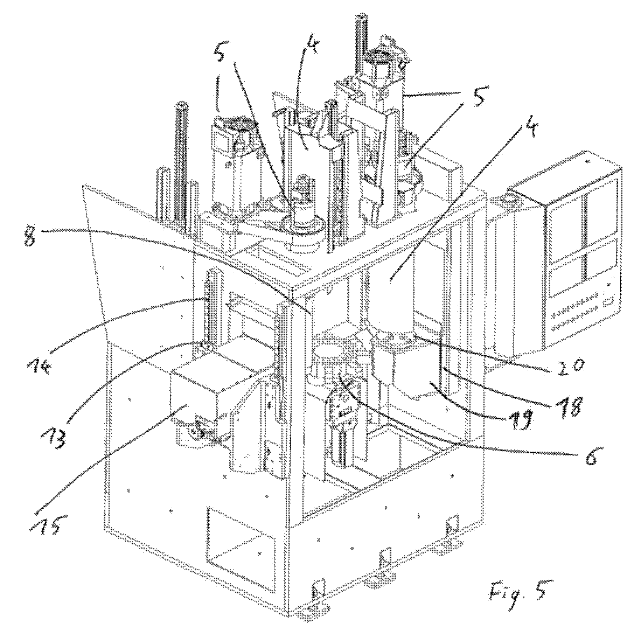

Fig. 5 zeigt eine Ansicht einer erfindungsgemäßen Drehmaschine mit zwei Arbeitsplattformen 13, 18. Die Arbeitsplattformen werden über die Schienenpaare 14 und 17 vertikal beweglich gelagert und sind mit einem entsprechenden Antrieb verbunden. Neben den Arbeitsplattformen 13, 18 sind zu erkennen Schottbleche 4, Antriebe 5 sowie Aufnahmen 2. Ebenfalls zu erkennen ist ein als Werkzeugrevolver ausgeführten ersten Werkzeugträger 6 auf einem zweiachsigen Verschiebetisch, wie auch in den vorhergehenden Beispielen. Die Drehmaschine weist analog zu Fig. 1 auch einen Roboterarm, ein Fließband und Tore auf, die jedoch nicht gezeigt sind. Darüber hinaus zu erkennen ist ein an eine Arbeitsplattform 18 festgelegter Bohrtisch 19 mit Mehrfachbohrkopf 20. Darüber hinaus gezeigt ist eine an einer zweiten Arbeitsplattform 13 festgelegte Verschiebevorrichtung 15, die einen nicht gezeigten zweiten Werkzeugrevolver trägt.

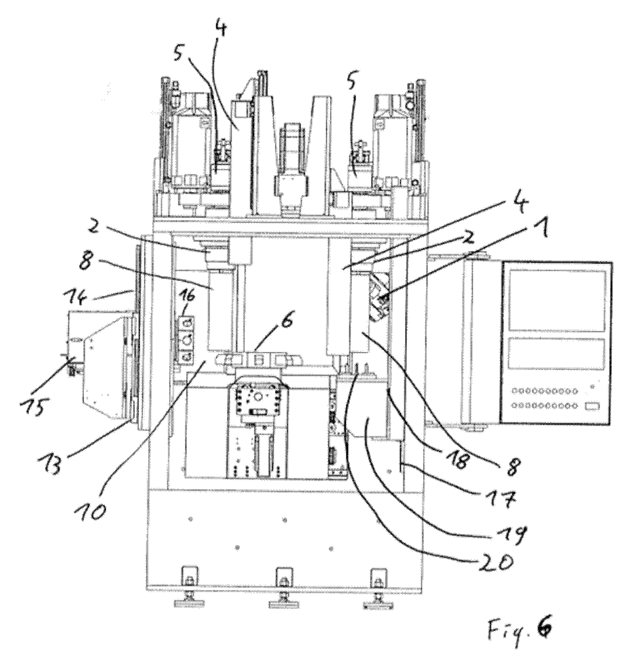

Fig. 6 zeigt die Drehmaschine aus Fig. 5 in einer anderen Ansicht, jedoch im gleichen Betriebszustand. Zusätzlich zu erkennen sind der zweite Werkzeugträger 16, der ebenfalls als Werkzeugrevolver ausgeführt ist und der Roboterarm 1. Er kann mit der Verschiebeeinrichtung 15 auf das links in der Figur gezeigte Werkstück 8 zu und von ihm wegbewegt werden. Während auf der links gezeigten Arbeitsspindel das Werkstück 8 vom ersten Werkzeugträger 6 und vom zweiten Werkzeugträger 16 bearbeitet wird, ist das rechte Schott 4 geschlossen und kann das rechte Werkstück stirnseitig mit dem Mehrfachbohrkopf bearbeitet und/oder die Rechte Spindel mit dem Roboterarm 1 be- und entladen werden. Anschließend kann das rechte Werkstück 8 mit dem ersten Werkzeugträger 6 bearbeitet werden und der linke Schott 4 zur Be- und Entladung der linken Aufnahme 2 geschlossen werden.

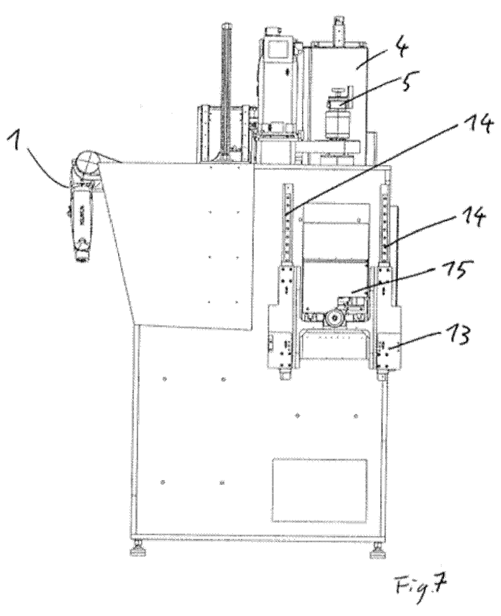

Fig. 7 zeigt eine weitere Ansicht der Drehmaschine aus den Fign. 5 und 6. Gut zu erkennen ist das erste Schienenpaar 13, auf dem die erste Arbeitsplattform 14 verfährt.

### Bezugszeichenliste

- 1: Robotorarm
- 2: Arbeitsspindel
- 3: Kreuzschlitten
- 4: Schottblech
- 5: Antrieb
- 6: Werkzeugrevolver
- 7: Reitstock
- 8: Werkstück
- 9: Reitstockschlitten
- 10: Arbeitsraum
- 11: Fließband
12 Tor
13 Erste Arbeitsplattform
14 Erstes Schienenpaar
15 Verschiebetisch
16 Zweiter Werkzeugträger
17 Zweites Schienenpaar
18 Zweite Arbeitsplattform
19 Bohrtisch
20 Mehrfachbohrkopf

## Patentansprüche

1. Drehmaschine zur spanenden Bearbeitung von Werkstücken (8) mit hauptzeitparalleler Be- und Entladung aufweisend mindestens zwei Arbeitsspindeln mit jeweils einer Aufnahme (2) für ein Werkstück (8), wobei die Rotationsachsen der Arbeitsspindeln vertikal verlaufen, und mit mindestens einem Werkzeugträger (6), der zur Aufnahme mindestens eines Werkzeuges ausgebildet ist und aufweisend mindestens einen Be- und Entladeautomaten (1), wobei der mindestens eine Werkzeugträger (6) so verfahrbar ist, dass er sowohl ein in einer ersten der Aufnahmen (2) aufgenommenes als auch ein in einer zweiten der Aufnahmen (2) aufgenommenes Werkstück (8) mit seinem mindestens einen Werkzeug bearbeiten kann, und mindestens eine Arbeitsplattform (13,18)
**dadurch gekennzeichnet,**
**dass** die mindestens zwei Arbeitsspindeln stationär angeordnet sind und der Werkzeugträger (6) mindestens zur zweiachsigen Vorschubbewegung senkrecht und parallel zu den Rotationsachsen der Arbeitsspindeln eingerichtet ist und der mindestens eine Be- und Entladeautomat (1) zur Be- und Entladung der Aufnahmen (2) mit Werkstücken ausgebildet ist und , dass die mindestens eine Arbeitsplattform parallel zur Rotationsachse einer Arbeitsspindel verfahrbar ist und zur Aufnahme von mindestens einem Werkzeug (10), einem Werkzeugträger (16), einer Verschiebevorrichtung, eines Zentriermittels (7) und/oder einer Zentriermittelaufnahme eingerichtet ist.

2. Drehmaschine nach Anspruch 1, **dadurch gekennzeichnet, dass** die Arbeitsplattform zur auswechselbaren Aufnahme von mindestens einem Werkzeug, einem Werkzeugträger, einer Verschiebevorrichtung, eines Zentriermittels und/oder einer Zentriermittelaufnahme eingerichtet ist.

3. Drehmaschine nach einem der vorstehenden Ansprüche, **dadurch gekennzeichnet, dass** eine Arbeitsplattform pro Arbeitsspindel vorgesehen ist.

4. Drehmaschine nach einem der vorstehenden Ansprüche, **dadurch gekennzeichnet, dass** jede Arbeitsplattform einer der Arbeitsspindeln zugeordnet und zu deren Rotationsachse parallel verfahrbar ist.

5. Drehmaschine nach einem der vorstehenden Ansprüche, **dadurch gekennzeichnet, dass** mindestens einer, insbesondere jeder, Arbeitsspindel ein auf der Rotationsachse der Arbeitsspindel verfahrbarer Reitstock (7) zugeordnet ist, wobei Aufnahme (2) und Reitstock (7) jeder Arbeitsspindel eingerichtet sind, ein Werkstück (8) an zwei Enden zu halten und/oder zu stützen.

6. Drehmaschine nach einem der vorstehenden Ansprüche, **dadurch gekennzeichnet, dass** der mindestens eine Be- und Entladeautomat (1) mindestens einen Robotorarm (1) umfasst.

7. Drehmaschine nach einem der vorstehenden Ansprüche, **dadurch gekennzeichnet, dass** pro oder pro zwei Arbeitsspindel ein oder zwei Robotorarme als Be- und Entladeautomat vorgesehen sind.

8. Drehmaschine nach einem der vorstehenden Ansprüche, **dadurch gekennzeichnet, dass** pro Arbeitsspindeln ein verfahrbares Schott (4) vorgesehen ist.

9. Verfahren zur spanenden Bearbeitung von in Arbeitsspindeln mit vertikalen Rotationsachsen aufgenommenen Werkstücken (8), wobei mindestens zwei Arbeitsspindeln mit vertikalen Rotationsachsen und jeweils einer Aufnahme (2) zur Aufnahme eines Werkstücks (8) und mindestens ein Werkzeugträger (6), der zur Aufnahme mindestens eines Werkzeuges ausgebildet ist vorgehalten werden und mindestens ein Beund Entladeautomat (1) vorgehalten wird, wobei die Ent- und Beladung von Werkstücken (8) in der Aufnahme (2) einer ersten der Arbeitsspindeln sich zeitlich mit der Bearbeitung eines Werkstücks (8) in der Aufnahme (2) einer zweiten der Arbeitsspindeln überschneidet und mindestens ein Werkzeug eines ersten der mindestens einen Werkzeugträger (6) zur Bearbeitung von in der ersten Aufnahme (2) aufgenommenen Werkstücken (8) und mindestens ein Werkzeug des ersten Werkzeugträgers (6) zur Bearbeitung in der zweiten Aufnahme (2) aufgenommenen Werkstücken (8) verwendet wird, und mindestens eine Arbeitsplattform (13,18) vorgehalten wird **dadurch gekennzeichnet, dass**
die mindestens zwei Arbeitsspindeln stationär angeordnet sind und der Werkzeugträger (6) mindestens zur zweiachsigen Vorschubbewegung senkrecht und parallel zu den Rotationsachsen der Arbeitsspindeln eingerichtet ist,
die mindestens eine Arbeitsplattform parallel zur Rotationsachse einer Arbeitsspindel verfahrbar ist und zur Aufnahme von mindestens einem Werkzeug (10), einem Werkzeugträger (16), einer Verschiebevorrichtung, eines Zentriermittels (7) und/oder einer Zentriermittelaufnahme eingerichtet ist, und dass zur Beladung der Aufnahmen jeweils mit dem mindestens einen Be- und Entladeautomat (1) ein Werkstück (8) aufgenommen wird und in die Aufnahme (2) verbracht wird und
zur Entladung der Aufnahmen jeweils mit dem mindestens einen Be- und Entladeautomat (1) das zu entladene Werkstück (8) aufgenommen und aus der Aufnahme (2) entfernt wird

10. Verfahren nach dem Anspruch 9, wobei mindestens eine vertikal verfahrbare Arbeitsplattform (7), insbesondere pro vorgehaltener Arbeitsspindel eine Arbeitsplattform (7), vorgehalten wird und zur Beladung der Arbeitsspindeln an mindestens einer der Arbeitsspindeln, insbesondere an den Arbeitsspindeln jeweils, nach dem Verbringen des Werkstücks in die Aufnahme (2) der zu beladenen Arbeitsspindel die Arbeitsplattform (7) der zu beladenen Arbeitsspindel in Richtung zur Aufnahme (2) der zu beladenen Arbeitsspindel bis zum Stützen des Werkstücks durch ein an der Arbeitsplattform festgelegtes Zentriermittel oder einen an der Arbeitsplattform festgelegten Reitstock oder endständigen Kontakt eines an der Arbeitsplattform aufgenommenen Zentriermittels, Reitstocks oder Sonderwerkzeugs mit dem Werkstücks (8) auf die Aufnahme (2) der zu beladenen Arbeitsspindel zubewegt wird und/oder
zur Entladung mindestens einer der Arbeitsspindeln, insbesondere der Arbeitsspindeln jeweils, vor dem Aufnehmen des zu entladene Werkstück (8) mit dem mindestens einen Be- und Entladeautomat (1) die auf die zu entladene Arbeitsspindel zugefahren Arbeitsplattform (7) in Richtung von der Aufnahme (2) der zu entladenen Arbeitsspindel weg bewegt wird.

11. Verfahren nach Anspruch 9 oder 10, wobei mindestens eine vertikal verfahrbare Arbeitsplattform (7), insbesondere pro vorgehaltener Arbeitsspindel eine Arbeitsplattform (7), und nach einem Beladen oder vor einem Entladen eines zweiten Werkstücks in eine zweite oder aus einer zweiten Arbeitsspindel mittels eines an einer vertikal verfahrbaren Arbeitsplattform festgelegtem Werkzeug eine Bearbeitung des in der zweiten Arbeitsspindel aufgenommenen zweiten Werkstücks durchgeführt wird, während ein erstes Werkstück, in einer ersten Arbeitsspindel aufgenommen, zerspannend bearbeitet wird, insbesondere von einem Werkzeug des Werkzeugträgers.

12. Verfahren nach einem der Ansprüche 9 bis 11, wobei zur Be- und Entladung der ersten und der zweiten Aufnahme ein Robotorarm (1) als Be- und Entladeautomat (1) verwendet wird.

13. Verfahren nach einem der Ansprüche 9 bis 12, wobei jeder Arbeitsspindel ein verfahrbares Schott zugeordnet ist und die Schotte jeweils so verfahren werden, dass während der Be- und Entladung der zugeordneten Arbeitsspindel das Schott der zu be- oder entladenen Arbeitsspindel so angeordnet ist, dass es den Flug von Spänen in die Aufnahme der zu be- oder entladenen Arbeitsspindel hindert und vor der Bearbeitung eines in einer Aufnahme einer Arbeitsspindel aufgenommenen Werkstücks das zugeordnete Schott so bewegt wird, dass der Zugang zum aufgenommenen Werkstück für mindestens ein Werkzeug des mindestens einen Werkzeugträgers freigegeben wird.

## Claims

1. A lathe for machining workpieces (8) with cycle-time concurrent loading and unloading having at least two work spindles with respectively one receptacle (2) for a workpiece (8), where the rotational axes of the work spindles extend vertically, and with at least one tool carrier (6), which is designed for receiving at least one tool and having at least one loading and unloading robot (1), wherein said at least one tool carrier (6) is mobile in such a way that it can process a workpiece (8) received in a first of the receptacles (2) as well as a workpiece received in a second of the receptacles (2) with its at least one tool, and at least one work platform (13,18)
**characterised in**
**that** said at least two work spindles are arranged to be stationary and that the tool carrier (6) is oriented vertical at least to the biaxial feed movement and parallel to the rotational axes of the work spindles and said at least one loading and unloading robot (1) is designed for loading and unloading the receptacles (2) with workpieces and that said at least one work platform is mobile parallel to the rotational axis of a work spindle and is set up for receiving at least one of a tool (10), a tool carrier (16), a feeding mechanism, a centring means (7) and/or a centring means receptacle.

2. The lathe according to claim 1, **characterised in that** the work platform is set up for receiving interchangeably at least one of a tool, a tool carrier, a feeding mechanism, a centring means and/or a centring means receptacle.

3. The lathe according to one of the previous claims, **characterised in that** one work platform is provided per work spindle.

4. The lathe according to one of the previous claims, **characterised in that** every platform is associated with one of the work spindles and is mobile parallel to the rotational axis thereof.

5. The lathe according to one of the previous claims, **characterised in that** at least one, in particular every, work spindle is associated a tailstock (7) mobile on the rotational axis of the work spindle, wherein the receptacle (2) and the tailstock (7) of every work spindle are set up to hold and/or to support a workpiece (8) at both ends.

6. The lathe according to one of the previous claims, **characterised in that** said at least one loading and unloading robot (1) includes at least one robot arm (1).

7. The lathe according to one of the previous claims, **characterised in that** for each or for each pair of work spindles one or two robot arms are provided as a loading and unloading robot.

8. The lathe according to one of the previous claims, **characterised in that** a mobile bulkhead (4) is provided for each work spindle.

9. A method for machining workpieces (8) received in work spindles with vertical rotational axes, wherein at least two work spindles with vertical rotational axes and respectively one receptacle (2) for receiving a workpiece (8) and at least one tool carrier (6), designed for receiving at least one tool, are made available and at least one loading and unloading robot (1) is made available, wherein the unloading and loading of workpieces (8) in the receptacle (2) of a first work spindle is overlapped in time with the processing of a workpiece (8) in the receptacle (2) of a second work spindle and at least one tool of a first of said at leat one tool carrier (6) is used for processing workpieces (8) received in the first receptacle (2) and at least one tool of a first of said at least one tool carrier (6) is used for processing workpieces (8) received in the second receptacle (2) and at least one work platform (13,18) is made available **characterised in that** said at least two work spindles are arranged to be stationary and that the tool carrier (6) is oriented vertical at least to the biaxial feed movement and parallel to the rotational axes of the work spindles, that said at least one work platform is mobile parallel to the rotational axis of a work spindle and is set up for receiving at least one of a tool (10), a carrier (16), a feeding mechanism, a centring means (7) and/or a centring means receptacle, and that to load the receptacle a workpiece (8) is taken respectively by said at least one loading and unloading robot (1) and said workpiece is then brought into the receptacle (2) and
to unload the receptacle, the workpiece (8) to be removed is taken away respectively by at least one loading an unloading robot (1) and said workpiece is then taken away from said receptacle (2)

10. The method according to claim 9, wherein at least one vertically mobile work platform (7), especially one per work spindle made available, one work platform (7) is made available and for unloading the work spindles, on at least one of the work spindles, in particular on the work spindles respectively after bringing the workpiece into the receptacle (2) of the work spindle to be loaded, the work platform (7) of the work spindle to be loaded is moved into the direction of the receptacle to be loaded until it supports the workpiece using a centring means provided on the work platfom and using a tailstock mounted on the platform or an end contact of a centring means, a tailstock or a special tool received on the work platform, with the tool (8) onto the receptacle (2) of the work spindle to be loaded and/or for unloading at least one of the work spindles, in particular the work spindles respectively, before receiving the workpiece to be unloaded (8) with said at least loading and unloading robot (1), the work platform (7) having moved towards the work spindle to be loaded, is moved away in the direction of the receptacle (2) of the work spindle to be loaded.

11. The method of claim 9 or 10, wherein at least one vertically mobile work platform (7), in particular for every work spindle made available, a work platform (7), and after loading or before unloading a second workpiece into or from a second work spindle using a tool attached to vertically mobile work platform, the second workpiece received in the second work spindle is machined, while a first workpiece, received in a first work spindle, is machined, in particular by a tool of the tool carrier.

12. The method according to one of the claims 9 to 11, wherein for loading and unloading the first receptacle and the second receptacle a robot arm (1) is used as a loading and unloading robot (1).

13. The method according to one of the claims 9 to 12, wherein every work spindle is associated a mobile bulkhead and the bulkheads are moved respectively in such a way that during the loading an unloading of the associated work spindle the bulkhead of the work spindle to be loaded or unloaded is arranged so as to interfere with the flight of chips into the receptacle of the work spindle to be loaded or unloaded and before machining a workpiece received in a receptacle of a work spindle, the associated bulkhead is moved so as to release access to the received workpiece for at least one tool of said at least one tool carrier.

## Revendications

1. Tour pour usinage de pièces (8) avec chargement et déchargement concomitants comportant au moins deux broches de travail avec respectivement un réceptacle (2) pour une pièce (8), où les axes de rotation des broches de travail s'étendent verticalement et avec au moins un porte-outil (6), qui est conçu pour recevoir au moins un outil et ayant au moins un robot de chargement et de déchargement (1), où ledit au moins un porte-outil (6) est mobile de telle manière à pouvoir traiter une pièce (8) reçue dans un premier de ces réceptacles (2) ainsi qu'une pièce reçue dans un deuxième des réceptacles (2) avec son au moins un outil, et au moins une plate-forme de travail (13,18)
**caractérisé en**
**ce que** lesdites au moins deux broches de travail sont disposées de manière stationnaire et que le porte-outil (6) est orienté à la verticale au moins par rapport au mouvement d'avance biaxial et parallèle à l'axe de rotation des broches de travail et ledit au moins un robot de chargement et de déchargement (1) est conçu pour le chargement et le déchargement des réceptacles (2) avec des pièces et que ladite au moins une plate-forme de travail est mobile parallèle à l'axe de rotation d'une broche de travail et est configurée pour recevoir au moins l'un des éléments parmi un outil (10), un porte-outil (16), un mécanisme d'alimentation, un moyen de centrage (7) et/ou un réceptacle pour moyen de centrage.

2. Tour selon la revendication 1, **caractérisé en ce que** la plate-forme de travail est configurée pour recevoir indifféremment au moins l'un des éléments parmi un outil, un porte-outil, un mécanisme d'alimentation, un moyen de centrage et/ou un réceptacle pour moyen de centrage.

3. Tour selon l'une des revendications précédentes, **caractérisé en ce qu'**une plate-forme de travail est fournie par broche de travail.

4. Tour selon l'une des revendications précédentes, **caractérisé en ce que** chaque plate-forme est associée à l'une des broches de travail et est mobile parallèle à l'axe de rotation de celles-ci.

5. Tour selon l'une des revendications précédentes, **caractérisé en ce qu'**au moins une, chaque broche de travail est associée à une poupée (7) mobile sur l'axe de rotation de la broche de travail, où le réceptacle (2) et la poupée mobile (7) de chaque broche de travail est configurée pour maintenir et/ou supporter une pièce (8) aux deux extrémités.

6. Tour selon l'une des revendications précédentes, **caractérisé en ce que** ledit au moins un robot de chargement et de déchargement (1) comprend au moins un bras de robot (1).

7. Tour selon l'une des revendications précédentes, **caractérisé en ce que** pour chaque broche de travail ou pour chaque paire de broches de travail un ou deux bras robotisés sont fournies sous forme de robot de chargement et de déchargement.

8. Tour selon l'une des revendications précédentes, **caractérisé en ce qu'**un tablier mobile (4) est fourni pour chaque broche de travail.

9. Procédé d'usinage de pièces (8) reçues dans les broches de travail avec axes de rotation verticaux, où au moins deux broches de travail avec axes de rotation verticaux et respectivement un réceptacle (2) pour recevoir une pièce (8) et au moins un porte-outil (6), conçu pour recevoir au moins un outil, sont disponibles et au moins un robot de chargement et de déchargement (1) est disponible, où le déchargement et le chargement de pièces (8) dans le réceptacle (2) d'une première broche de travail se chevauchent avec le traitement d'une pièce (8) dans le réceptacle (2) d'une deuxième broche de travail et au moins un outil d'un premier dit au moins un porte-outil (6) est utilisé pour le traitement de pièces (8) reçues dans le premier réceptacle (2) et au moins un outil d'un premier dudit au moins porte-outil (6) est utilisé pour le traitement des pièce (8) reçues dans le deuxième réceptacle (2) et au moins une plate-forme de travail (13,18) est disponible, **caractérisé en ce que** lesdites au moins deux broches de travail sont disposées de manière stationnaire et que le porte-outil (6) est orienté à la verticale au moins par rapport au mouvement d'avance biaxial et parallèle aux axes de rotation des broches de travail, que ladite au moins une plate-forme de travail est mobile parallèle à l'axe de rotation d'une broche de travail et est configurée pour recevoir au moins l'un des éléments parmi un outil (10), un porte-outil (16), un mécanisme d'alimentation, un moyen de centrage (7) et/ou un réceptacle pour moyen de centrage, et que
pour charger le réceptacle une pièce (8) est prise respectivement par ledit au moins un robot de chargement et de déchargement (1) et ladite pièce est ensuite amenée dans la réceptacle (2) et
pour décharger le réceptacle, une pièce (8) à retirer est extraite respectivement par ledit au moins un robot de chargement et de déchargement (1) et ladite pièce est ensuite retirée dudit réceptacle (2) et

10. Procédé selon la revendication 9, où au moins une plateforme de travail mobile verticalement (7), en particulier une par broche de travail disponible, une plate-forme de travail (7) est disponible pour le déchargement des broches de travail, sur au moins l'une des broches de travail, en particulier sur les broches de travail respectivement après avoir amené la pièce dans le réceptacle (2) de la broche de travail à charger, la plate-forme de travail (7) de la broche de travail à charger est déplacée dans la direction du réceptacle à charger jusqu'à ce qu'il prenne en charge la pièce à l'aide d'un moyen de centrage prévu sur la plate-forme de travail et en utilisant une poupée mobile montée sur la plate-forme ou d'un contact d'extrémité d'un moyen de centrage, d'une poupée mobile ou d'un outil spécial reçu sur la plate-forme de travail, avec l'outil (8) sur le réceptacle (2) de la broche de travail à charger et/ou pour décharger au moins l'une des broches de travail, en particulier les broches de travail respectivement, avant de recevoir la pièce (8) avec ledit au moins un robot de chargement et de déchargement (1), la plate-forme de travail (7) après s'être déplacée vers la broche de travail à charger, est écartée dans la direction du réceptacle (2) de la broche de travail à charger.

11. Procédé selon la revendication 9 ou 10, où au moins une plateforme de travail mobile verticalement (7), en particulier pour chaque axe de travail disponible, une plate-forme de travail (7), et après le chargement dans la direction ou avant le déchargement d'une deuxième pièce ou en provenance d'une deuxième broche de travail à l'aide d'un outil fixé à la plateforme de travail mobile verticalement, la deuxième pièce reçue dans la deuxième broche de travail est usiné, tandis qu'une première pièce, reçue dans une première broche de travail, est usinée, en particulier par un outil du porte-outil.

12. Procédé selon l'une quelconque des revendications 9 ou 11, où pour le chargement et le déchargement du premier réceptacle et du deuxième réceptacle, on utilise un bras du robot (1) comme un robot de chargement et de déchargement (1).

13. Procédé selon l'une des revendications 9 à 12, où chaque broche de travail est associée à un tablier mobile et les tabliers sont déplacés respectivement de telle manière que pendant le chargement d'un déchargement de la broche de travail associée, le tablier de la broche de travail à charger ou décharger est agencé de manière à perturber la projection de copeaux dans le réceptacle de la broche de travail à charger ou décharger et avant l'usinage d'une pièce reçue dans un réceptacle d'une broche de travail, le tablier associé se déplace pour libérer l'accès à la pièce reçue pour au moins un outil dudit au moins porte-outil.
